# EUROPÄISCHE PATENTSCHRIFT

(11) **EP 1 393 893 B1**
(45) Veröffentlichungstag und Bekanntmachung des Hinweises auf die Patenterteilung: **08.07.2020**
(21) Anmeldenummer: 03015725.9
(22) Anmeldetag: 10.07.2003
(51) Int. Cl.: B32B 7/12, B32B 15/08

(54) **Leichtbaustruktur aus metallischen Schichtwerkstoffen**
Lightweight material structure made of metal composite material
Structure légère d'un matériau composite métallique

(30) Priorität: 22.08.2002 DE 10238460
(43) Veröffentlichungstag der Anmeldung: 03.03.2004
(73) Patentinhaber: Airbus Operations GmbH, 21129 Hamburg (DE)
(72) Erfinder: Assler, Herwig, Dr., 21635 Jorgk (DE); Schmidt, Hans-Jürgen, 21614 Buxtehude (DE)
(74) Vertreter: Bird & Bird LLP

(56) Entgegenhaltungen:
- EP-A- 1 166 950
- WO-A-94/26994
- DE-A- 4 430 428
- US-A- 5 151 311
- US-A- 5 807 628

## Beschreibung

Die Erfindung betrifft eine Leichtbaustruktur aus metallischen Schichtwerkstoffen, wobei mindestens ein durchgängiges Metallblech durch Klebung mit einer weiteren Blechlage verbunden ist sowie ein Verfahren zur Herstellung einer derartigen Leichtbaustruktur.

Üblicherweise bekannte Leichtbaustrukturen bestehen aus einer Außenhaut, die auf der Innenseite durch eine zweidimensionale Versteifung verstärkt ist. Beispielsweise ist ein Flugzeugrumpf derartig aufgebaut, dessen Außenhaut mit Hilfe von Stringern und Spanten (inklusive Clip) verstärkt wird. Die Versteifungen werden durch Nieten, Kleben oder Schweißen angebracht. Zur lokalen Anpassung, d.h. Verringerung der Hautdicke aus Gewichtsgründen, insbesondere zwischen den Versteifungen - genannt Pocketing -, wird auf mechanische bzw. chemische Fräsverfahren zurückgegriffen.

Aus US 5 807 628 ist eine Struktur aus Metallblechlagen bekannt, wobei mindestens ein durchgängiges Metallblech und mindestens eine eine Wabenstruktur bildende gitterähnliche Blechlage durch Klebung miteinander verbunden sind, wobei die Wabenstruktur Streben aufweist, die freie Hautfelder begrenzt.

Aus EP 0 649 373 B1 bzw. US 5,429,326 ist eine Verbundplatte bekannt, die mindestens aus einer ersten und einer zweiten Metallschicht besteht, die mittels einer Klebstoffschicht miteinander verbunden sind. Derartige Metall-Polymer-Laminate sind insbesondere als Leichtbaustrukturen für Flugzeuganwendungen geeignet, da sie vorteilhafte mechanische Eigenschaften bei einem niedrigen strukturellen Gewicht aufweisen. Aufgrund einer begrenzten Breite der zu verbindenden Metallbleche bzw. -folien sind für die Herstellung von Hautfeldern für einen Flugzeugrumpf Verbindungen erforderlich, die mittels einer in der Druckschrift beschriebenen Spleißtechnik realisiert werden können.

Eine lokale Anpassung der Bauteildicke an unterschiedliche Belastungsanforderungen ist hier nicht vorgesehen.

Aus WO 98/53989 A1 ist eine weitere Leichtbaustruktur mit verklebten Metallschichten beschrieben. Es wird eine Verbesserung des nach US 5,429,326 bekannten Spleißkonzepts zur Verbindung von einzelnen Laminat-Verbundplatten zu einem Bauteil vorgeschlagen. Maßnahmen zur lokalen Anpassung der Bauteildicke an Belastungsanforderungen sind hier ebenfalls nicht vorgesehen.

Der vorliegenden Erfindung liegt somit die Aufgabe zugrunde, bei einer gattungsgemäßen Leichtbaustruktur gewichtsoptimiert lokale Anpassungen an Belastungsanforderungen vorzunehmen sowie die Schadenstoleranzeigenschaften in Form von Rissfortschritt und Restfestigkeit zu verbessern.

Die Aufgabe wird durch eine Rumpfhaut für ein Flugzeug mit den Merkmalen des Anspruchs 1 sowie ein mit einem Verfahren nach Anspruch 10 hergestellte Rumpfhaut für einen Flugzeugrumpf gelöst. Bevorzugte Ausführungsformen sind in den abhängigen Ansprüchen angegeben.

Dabei ist insbesondere vorteilhaft, dass durch die Verwendung einer Fachwerkstruktur ein Traganteil von der Versteifungsstruktur übernommen werden kann und eine Entlastung der Versteifung möglich ist. Ein lokales Verringern der Hautdicke zwischen den Versteifungselementen aus Gewichtsgründen wird überflüssig, da generell die Hautdicke verringert werden kann und mit der Fachwerkstruktur lokale Anpassungen an Belastungsanforderungen erfolgen. Darüber hinaus besteht im Gegensatz zu den üblichen Versteifungen keine Einschränkungen bezüglich der Fachwerkgeometrie, so dass in beliebige Richtungen und an beliebigen Orten eine Steifigkeitsanpassung vorgenommen werden kann. Auf diese Weise ist ein optimales Maßschneidern (tailoring) der Hauteigenschaften für eine Rumpfhaut eines Flugzeuges möglich. Es entsteht eine Differentialverbindung, die eine Rissbehinderung ermöglicht für den Fall, dass sich ein Hautriss senkrecht zu der Fachwerkstruktur ausbreitet. Die Fachwerkstruktur überbrückt den Hautriss und sein Wachsen wird behindert bzw. gestoppt.
Weitere Vorteile ergeben sich aus der nachfolgenden Detailbeschreibung.

In der Zeichnung ist ein Ausführungsbeispiel der Erfindung dargestellt, welches nachstehend anhand der Figuren 1 bis 5 näher beschrieben wird. In den Figuren sind gleiche Bauteile mit gleichen Bezugszeichen versehen.

Es zeigen:
- Fig. 1: eine schematische Darstellung des Schichtaufbaus einer Leichtbaustruktur,
- Fig. 2: eine schematische Darstellung einer Fachwerkstruktur,
- Fig. 3: das Hautfeld für einen Flugzeugrumpf mit Versteifungselementen in einer schematischen Darstellung,
- Fig. 4: den Schichtaufbau der für das Hautfeld gemäß Fig. 3 verwendeten Leichtbaustruktur und
- Fig. 5: den Schichtaufbau einer Leichtbaustruktur in einer zweiten Ausführungsform.

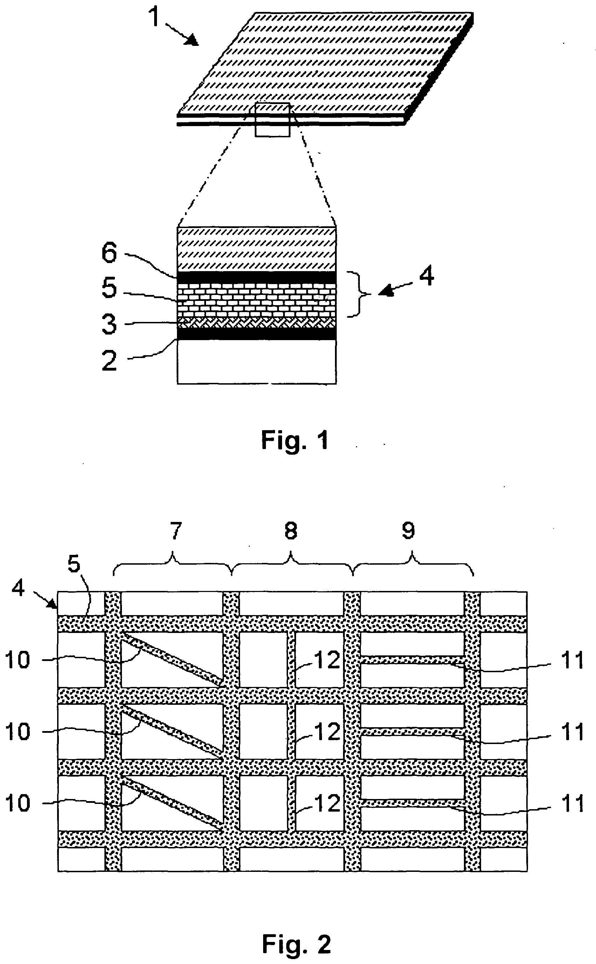

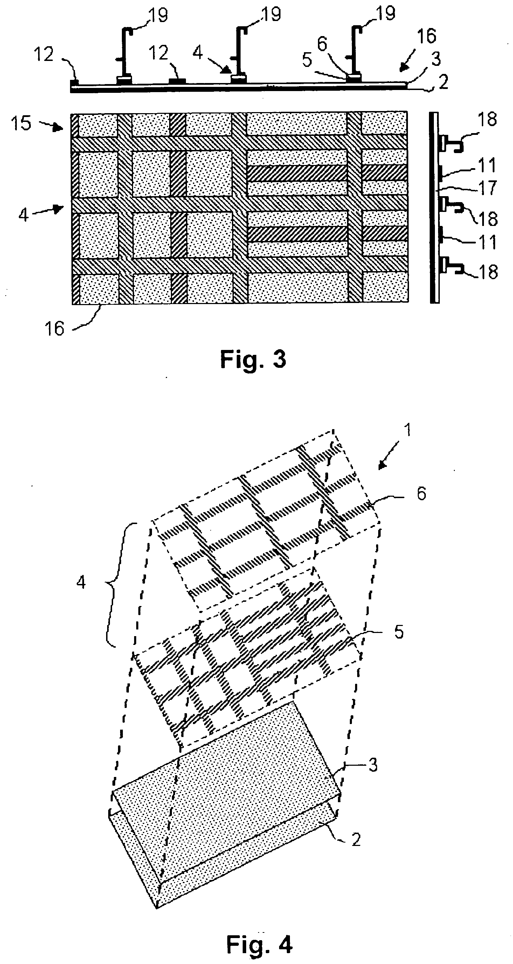

In der Fig. 1 ist der Schichtaufbau einer Leichtbaustruktur 1 dargestellt. Eine derartige Leichtbaustruktur 1 ist als Hautfeld für ein Flugzeugstrukturbauteil verwendbar. Während des Designprozesses von Flugzeugstrukturen ist eine Vielzahl von unterschiedlichen Auslegungskriterien zu berücksichtigen (z.B. Deformationsverhalten, statische Festigkeit, Stabilität, Rissinitiierung bzw. -ausbreitung, Restfestigkeit, Korrosionsbeständigkeit etc.), vor allem jedoch ist eine gewichtsoptimierte Lösung zu erreichen. Metall-Laminate, die verbesserte mechanische Eigenschaften gegenüber Metallblechen haben und gleichzeitig leichter sind, sind zur Verwendung im Hautbereich eines Flugzeugrumpfes vorteilhaft. Die Leichtbaustruktur 1 ist in der gezeigten Ausführung aus einer ersten und einer zweiten Metallschicht 2 und 3 aufgebaut, die durch Klebung miteinander verbunden sind. Beispielhaft für die Werkstoffwahl können Aluminiumlegierungen, Titanlegierungen, Stähle, Kupferlegierungen, Zinklegierungen und Magnesiumlegierungen genannt werden, die jeweils in dünnen Blechen verfügbar sein müssen. Die Metallschichten 2 und 3 liegen in einem Dickenbereich von weniger als 2 mm, bevorzugt sollten sie ein Dicke von 0,5 mm bis 1,5 mm aufweisen. Durch die Anwendung eines derartigen Schichtaufbaus können unterschiedliche Werkstoffe für die Außenhaut eines Flugzeugrumpfes entsprechend der lokalen Erfordernisse eingesetzt werden. Als Beispiel sei eine korrosionsbeständige Metallschicht an der Oberfläche des Schichtverbundes genannt, während im Kern besonders leichte, steife, feste oder schadenstolerante Legierungen zum Einsatz kommen können. Die jeweiligen Schichtdicken können den jeweiligen Bedürfnissen entsprechend angepasst werden. Auf diese Weise ist ein optimales Maßschneidern (tailoring) der Hauteigenschaften möglich. Ergänzt wird dieser Schichtaufbau durch eine zusätzliche Fachwerkstruktur 4 aus mindestens einer Blechlage 5, die auf die innere Metallschicht 3 aufgeklebt wird. In der gezeigten Ausführungsform sind zwei gitterähnliche Blechlagen 5 und 6 vorgesehen. Die Dicken der Blechlagen 5 und 6 liegen in einem Bereich von weniger als 2 mm, bevorzugt sollten sie ein Dicke von 0,5 mm bis 1,5 mm aufweisen Auf diese Blechlagen 5 und 6 ist es für die Verwendung der Leichtbaustruktur 1 vorgesehen, eine zweidimensionale Versteifung aufzubringen (siehe Fig. 3). Beispielsweise ist eine Rumpfstruktur eines Flugzeuges derartig aufgebaut, dessen Außenhaut mit Hilfe von Stringern und Spanten (inklusive Clip) als Versteifung verstärkt wird.

In Fig. 2 ist die Fachwerkstruktur 4 in einer Draufsicht ersichtlich. Wie nachfolgend in Fig. 3 gezeigt ist die Fachwerkstruktur 4 mindestens unter den Versteifungen vorhanden; kann aber auch zusätzlich im freien Hautfeld aufgebracht werden. Die Verwendung eine Fachwerkstruktur 4 mit mindestens einer Blechlage 5 kann zur Entlastung der Versteifung genutzt werden und macht das lokale Pocketing, d.h. die lokale Verringerung der Hautdicke zwischen den Versteifungselementen aus Gewichtsgründen, überflüssig. Darüber hinaus besteht im Gegensatz zu den üblichen Versteifungen keine Einschränkung bezüglich der Fachwerkgeometrie, so dass in beliebige Richtungen (z.B. diagonal zwischen den Versteifungen) und an beliebigen Orten (z.B. auch zwischen den Versteifungen) eine Steifigkeitsanpassung vorgenommen werden kann. Ausführungsformen von Fachwerkgeometrien sind am Beispiel der Blechlage 5 gezeigt, wobei vorzugsweise eine gitterähnliche Struktur vorliegt, die im wesentlichen der Versteifungsgeometrie entspricht. Darüber hinaus kann diese Struktur ergänzt sein durch diagonale Fachwerkstreben 10 (Bereich 7) zwischen den Kreuzungspunkten des Gitters 5 oder durch parallel zu den Versteifungselementen verlaufende Fachwerkstreben 11 und 12 (Bereich 8 und 9).

In Fig. 3 ist eine Rumpfstruktur 15 eines Flugzeugrumpfes unter Verwendung einer erfindungsgemäßen Leichtbaustruktur 1 gezeigt. Die Rumpfhaut 16 besteht aus der ersten und zweiten Metallschicht 2 und 3 sowie der darauf aufgebrachten Fachwerkstruktur 4 mit den Blechlagen 5 und 6. Die auf der Rumpfhaut 16 angeordnete zweidimensionale Versteifung ist gebildet aus Stringern 18 und Spante 19. Die Versteifungselemente werden durch Nieten, Kleben oder Schweißen angebracht. Die Fachwerkstruktur 4 ist mindestens unter den Versteifungselementen 18 und 19 vorhanden, ist aber auch zusätzlich bedarfsweise in freien Hautfeldern 17 zwischen den Versteifungselementen 18 und 19 vorgesehen. Ersichtlich sind in der gezeigten Ausführungsform parallel verlaufende Fachwerkstreben 11 und 12. Die Blechlage 5 weist dafür eine gitterähnliche Struktur auf (unterhalb der Versteifung 18 und 19) sowie weiterhin Fachwerkstreben 11 und 12, die auf den freien Hautfeldern 17 angeordnet sind. Direkt darauf ist die weitere Blechlage 6 mit einer gitterähnlichen Struktur aufgebracht. Sie verläuft unterhalb der Versteifung aus Stringer 18 und Spante 19. Die derartig aufgebaute Fachwerkstruktur 4 übernimmt einen Teil des ursprünglich von den Versteifungen 18 und 19 aufgebrachten Traganteils. Gewichtseinsparungen bei den Versteifungselementen 18 und 19 werden somit zusätzlich ermöglicht.

Die Fachwerkstruktur 4 wird durch Kleben mit den übrigen Metallschichten 2 und 3 verbunden. Für das Verkleben werden handelsübliche Metallkleber wie z.B. Reaktionskleber verwendet, die durch eine chemische Umsetzung ihrer Bestandteile aushärten. Im Vergleich zu faserverstärkten Schichtwerkstoffen ist der Wegfall der relativ teuren Faserlagen ein bedeutsamer Vorteil. Mit dem Kleben erzielt man keine integrale Verbindung und es wird eine Rissbehinderung für den Fall ermöglicht, dass sich ein Hautriss im wesentlichen senkrecht zum Fachwerkarm bzw. zur Fachwerkstrebe ausbreitet. In einem solchen Fall verhindert die Klebeschicht eine direkte Rissausbreitung in der Fachwerkstrebe, welche den Hautriss überbrückt und sein Wachsen behindert bzw. stoppt.

Weiterhin entsteht im Bereich der Fertigung ein vorteilhaftes Einsparpotential, wenn die Leichtbaustruktur 1 in einem Herstellprozess mit den Versteifungen 18 und 19 geklebt wird. Eine weitere vorteilhafte Ausbildung kann die Kombination von Herstellverfahren sein, beispielsweise erfolgt ein Verkleben der Stringer 18 mit der Rumpfhaut 16 gemeinsam mit der Leichtbaustruktur 1. Das Verbinden der Spante 19 ist dann in einem nächsten Verfahrensschritt durch übliche Methoden, wie Nieten möglich.

In Fig. 4 ist in einer perspektivischen Ansicht noch einmal der Schichtaufbau der in Fig. 3 verwendeten Leichtbaustruktur 1 gezeigt. Ersichtlich ist die Ausbildung der Fachwerkstruktur 4, bestehend aus den Blechlagen 5 und 6, die mit den Metallblechen 2 und 3 verbunden wird. Aufgrund der möglichen Flexibilität der Geometrien der Fachwerkstruktur 4, der Auswahl der Schichtdicken sowie der Materialauswahl für die Schichten kann ein optimiertes Anpassen der Eigenschaften an die Anforderungen einer Flugzeugrumpfstruktur 15 erfolgen. Beispielsweise ist es in einer weiteren Ausführungsform auch möglich, unter Beibehaltung der gitterähnlichen Blechlage 5 die innere Blechlage 6 anforderungsgemäß mit Blechstreifen als längs- oder querverlaufende Streben auszubilden (nicht gezeigt).

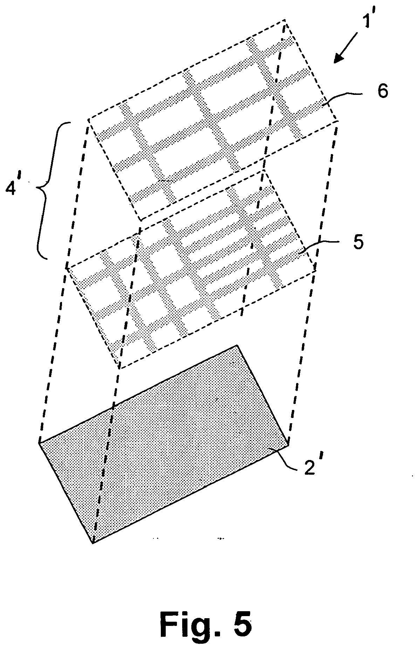

In Fig. 5 ist eine Leichtbaustruktur 1' in einer zweiten Ausführungsform gezeigt. In dieser Ausführungsform wird statt eines Metallblechverbundes ein durchgängiges Metallblech 2' verwendet. Die Ausführung der Fachwerkstruktur 4' entspricht der bereits beschriebenen Fachwerkstruktur 4. Das Metallblech 2' ist entsprechend der auftretenden Belastungen bzw. örtlichen Beanspruchungen zu dimensionieren, wobei vorzugsweise eine Blechdicke bis 5 mm vorgesehen ist.

### Bezugszeichenliste

- 1: - Leichtbaustruktur
- 2: - erstes Metallblech
- 3: - zweites Metallblech
- 4: - Fachwerkstruktur
- 5: - erste gitterähnliche Metallschicht (Blechlage)
- 6: - zweite gitterähnliche Metallschicht (Blechlage)
- 7: - erster Bereich einer Blechlage
- 8: - zweiter Bereich einer Blechlage
- 9: - dritter Bereich einer Blechlage
- 10: - diagonale Fachwerkstreben
- 11: - parallel verlaufende Fachwerkstreben (in Längsrichtung)
- 12: - parallel verlaufende Fachwerkstreben (in Querrichtung)

- 15: - Rumpfstruktur eines Flugzeuges
- 16: - Rumpfhaut
- 17: - freies Hautfeld zwischen Versteifungen
- 18: - Stringer
- 19: - Spante

- 1': - Leichtbaustruktur in einer zweiten Ausführungsform
- 2': - Metallblech in einer zweiten Ausführungsform
- 4': - Fachwerkstruktur in zweiter Ausführungsform

## Patentansprüche

1. Rumpfhaut (16) für einen Flugzeugrumpf (15), die von einer Leichtbaustruktur aus dünnen Metallblechlagen gebildet wird, wobei mindestens ein durchgängiges Metallblech (2, 3; 2') und mindestens eine eine Fachwerkstruktur (4, 4') bildende gitterähnliche Blechlage (5, 6) durch Klebung miteinander verbunden sind und wobei auf einer Rumpfinnenseite der Rumpfhaut (16) Versteifungselemente (18, 19), wie Stringer und Spante, befestigt sind, zwischen denen sich freie Hautfelder (17) erstrecken, **dadurch gekennzeichnet, dass** die Fachwerkstruktur (4) freie Hautfelder (17) begrenzende Fachwerkstreben aufweist, die mindestens teilweise unterhalb der Versteifungselemente (18, 19) verlaufen.

2. Rumpfhaut (16) nach Anspruch 1, **dadurch gekennzeichnet, dass** mindestens zwei Metallbleche (2, 3) durch Klebung miteinander verbunden sind, diese Metallbleche (2, 3) einen Metallblechverbund bilden und auf diesen Metallblechverbund die Fachwerkstruktur (4) aufgeklebt ist.

3. Rumpfhaut (16) nach Anspruch 1 oder 2, **dadurch gekennzeichnet, dass** die die Fachwerkstruktur (4) bildenden gitterähnlichen Blechlagen (5, 6) eine erste gitterähnliche Blechlage (5) und eine zweite gitterähnliche Blechlage (6) umfassen, wobei die erste gitterähnliche Blechlage (5) direkt auf das durchgängige Metallblech (2, 3; 2') aufgeklebt ist und die die freien Hautfelder (17) begrenzenden Fachwerkstreben sowie weiterhin im freien Hautfeld (17) verlaufende zusätzliche Fachwerkstreben (10, 11, 12) aufweist, und die zweite gitterähnliche Blechlage (6) auf die erste gitterähnliche Blechlage (5) aufgebracht ist und zumindest die die freien Hautfelder (17) begrenzenden Fachwerkstreben aufweist.

4. Rumpfhaut (16) nach einem der Ansprüche 1 bis 3, **dadurch gekennzeichnet, dass** die die freien Hautfelder (17) begrenzenden Fachwerkstreben unter den Versteifungselementen (18, 19) verlaufen.

5. Rumpfhaut (16) nach einem der vorhergehenden Ansprüche, **dadurch gekennzeichnet, dass** die Fachwerkstruktur (4, 4') nach belastungsabhängigen Kriterien auf mindestens einem Metallblech (2, 3; 2') angeordnet ist, wobei die Fachwerkgeometrie parallel (Fachwerkstreben 11, 12) zu den Versteifungselementen (18, 19) und/oder in beliebigen Richtungen, beispielsweise diagonal (Fachwerkstrebe 10), zwischen Kreuzungspunkten der Versteifungselemente (18, 19) verläuft.

6. Rumpfhaut (16) nach einem der Ansprüche 1 bis 5, **dadurch gekennzeichnet, dass** mindestens eine, zur Rumpfinnenseite gerichtete Blechlage (6) der Fachwerkstruktur (4, 4') aus streifenförmigen Blechlagen gebildet ist.

7. Rumpfhaut (16) nach einem der Ansprüche 1 bis 6, **dadurch gekennzeichnet, dass** die Metallbleche (2, 3) sowie die Blechlagen (5, 6) der Fachwerkstruktur (4, 4') jeweils eine Dicke von weniger als 2 mm aufweisen.

8. Rumpfhaut (16) nach einem der Ansprüche 1 bis 7, **dadurch gekennzeichnet, dass** die Metallbleche (2, 3) sowie die Blechlagen (5, 6) der Fachwerkstruktur (4, 4') jeweils eine Dicke von 0,5 mm bis 1,5 mm aufweisen.

9. Rumpfhaut (16) nach einem der Ansprüche 1 bis 8, **dadurch gekennzeichnet, dass** das Material der Metallbleche (2, 3) sowie der Fachwerkstruktur (4, 4') aus einer Gruppe von Materialien ausgewählt ist, die Aluminiumlegierungen, Titanlegierungen, Stahllegierungen, Kupferlegierungen, Zinklegierungen und Magnesiumlegierungen umfasst.

10. Verfahren zur Herstellung einer Rumpfhaut (16) nach einem der vorangegangenen Ansprüche, wobei die mindestens eine Blechlage (5, 6) der Fachwerkstruktur (4, 4') mit mindestens einem Metallblech (2, 3) verklebt wird.

11. Verfahren nach Anspruch 10, **dadurch gekennzeichnet, dass** auf die Fachwerkstruktur (4, 4') zumindest teilweise die Versteifungsstruktur (18, 19) geklebt wird.

12. Verfahren nach einem der Ansprüche 10 oder 11, **dadurch gekennzeichnet, dass** die Verklebung in einem Herstellprozess durchgeführt wird.

## Claims

1. Fuselage skin (16) for an aircraft fuselage (15), which fuselage skin (16) is formed by a lightweight structure consisting of thin metal sheet layers, at least one continuous metal sheet (2, 3; 2') and at least one grille-like sheet metal layer (5, 6) which forms a framework structure (4, 4') being connected to one another by way of adhesive bonding, and reinforcing elements (18, 19), such as stringers and ribs, being fastened on a fuselage inner side of the fuselage skin (16), between which reinforcing elements (18, 19) free skin panels (17) extend, **characterized in that** the framework structure (4) has framework struts which delimit free skin panels (17) and run at least partially below the reinforcing elements (18, 19).

2. Fuselage skin (16) according to Claim 1, **characterized in that** at least two metal sheets (2, 3) are connected to one another by way of adhesive bonding, the said metal sheets (2, 3) form a metal sheet composite, and the framework structure (4) is adhesively bonded to the said metal sheet composite.

3. Fuselage skin (16) according to Claim 1 or 2, **characterized in that** the grille-like sheet metal layers (5, 6) which form the framework structure (4) comprise a first grille-like sheet metal layer (5) and a second grille-like sheet metal layer (6), the first grille-like sheet metal layer (5) being adhesively bonded directly onto the continuous metal sheet (2, 3; 2'), and having the framework struts which delimit the free skin panels (17) and, furthermore, additional framework struts (10, 11, 12) which run in the free skin panel (17), and the second grille-like sheet metal layer (6) being attached to the first grille-like sheet metal layer (5) and having at least the framework struts which delimit the free skin panels (17).

4. Fuselage skin (16) according to one of Claims 1 to 3, **characterized in that** the framework struts which delimit the free skin panels (17) run below the reinforcing elements (18, 19).

5. Fuselage skin (16) according to one of the preceding claims, **characterized in that** the framework structure (4, 4') is arranged on at least one metal sheet (2, 3; 2') in accordance with loading-dependent criteria, the framework geometry running parallel (framework struts 11, 12) to the reinforcing elements (18, 19) and/or in any desired directions, for example diagonally (framework struts 10), between crossing points of the reinforcing elements (18, 19).

6. Fuselage skin (16) according to one of Claims 1 to 5, **characterized in that** at least one sheet metal layer (6) of the framework structure (4, 4'), which sheet metal layer (6) is directed towards the fuselage inner side, is formed from strip-shaped sheet metal layers.

7. Fuselage skin (16) according to one of Claims 1 to 6, **characterized in that** the metal sheets (2, 3) and the sheet metal layers (5, 6) of the framework structure (4, 4') in each case have a thickness of less than 2 mm.

8. Fuselage skin (16) according to one of Claims 1 to 7, **characterized in that** the metal sheets (2, 3) and the sheet metal layers (5, 6) of the framework structure (4, 4') in each case have a thickness of from 0.5 mm to 1.5 mm.

9. Fuselage skin (16) according to one of Claims 1 to 8, **characterized in that** the material of the metal sheets (2, 3) and of the framework structure (4, 4') is selected from a group of materials which comprises aluminium alloys, titanium alloys, steel alloys, copper alloys, zinc alloys and magnesium alloys.

10. Method for producing a fuselage skin (16) according to one of the preceding claims, the at least one sheet metal layer (5, 6) of the framework structure (4, 4') being adhesively bonded to at least one metal sheet (2, 3) .

11. Method according to Claim 10, **characterized in that** the reinforcing structure (18, 19) is adhesively bonded at least partially to the framework structure (4, 4').

12. Method according to either of Claims 10 and 11, **characterized in that** the adhesive bonding is carried out in a production process.

## Revendications

1. Panneau de fuselage (16) pour un fuselage d'avion (15), qui est formé par une structure légère constituée de couches de tôle métallique minces, au moins une tôle métallique continue (2, 3 ; 2') et au moins une couche de tôle (5, 6) de type grille formant une structure en treillis (4, 4') étant assemblées l'une à l'autre par collage et des éléments de renforcement (18, 19), tels que des chaînes et des membrures, étant fixés sur un côté de fuselage intérieur du panneau de fuselage (16), entre lesquels s'étendent des champs de panneau libres (17), **caractérisé en ce que** la structure en treillis (4) présente des traverses de treillis limitant des champs de panneau libres (17), lesquelles s'étendent au moins en partie sous les éléments de renforcement (18, 19).

2. Panneau de fuselage (16) selon la revendication 1, **caractérisé en ce qu'**au moins deux tôles métalliques (2, 3) sont assemblées l'une à l'autre par collage, ces tôles métalliques (2, 3) forment un assemblage de tôles métalliques et la structure en treillis (4) est collée sur cet assemblage de tôles métalliques.

3. Panneau de fuselage (16) selon la revendication 1 ou 2, **caractérisé en ce que** les couches de tôle (5, 6) de type grille formant la structure en treillis (4) comprennent une première couche de tôle de type grille (5) et une deuxième couche de tôle de type grille (6), la première couche de tôle de type grille (5) étant collée directement sur la tôle métallique continue (2, 3 ; 2') et présentant les traverses de treillis limitant les champs de panneau libres (17) ainsi que des traverses de treillis supplémentaires (10, 11, 12) s'étendant dans le champ de panneau libre (17), et la deuxième couche de tôle de type grille (6) étant appliquée sur la première couche de tôle de type grille (5) et présentant au moins les traverses de treillis limitant les champs de panneau libres (17).

4. Panneau de fuselage (16) selon l'une quelconque des revendications 1 à 3, **caractérisé en ce que** les traverses de treillis limitant les champs de panneau libres (17) s'étendent sous les éléments de renforcement (18, 19).

5. Panneau de fuselage (16) selon l'une quelconque des revendications précédentes, **caractérisé en ce que** la structure en treillis (4, 4') est disposée, selon des critères dépendant des contraintes, sur au moins une tôle métallique (2, 3 ; 2'), la géométrie en treillis s'étendant parallèlement (traverses de treillis (11, 12)) aux éléments de renforcement (18, 19) et/ou dans des directions quelconques, par exemple en diagonale (traverse de treillis (10)), entre des points d'intersection des éléments de renforcement (18, 19).

6. Panneau de fuselage (16) selon l'une quelconque des revendications 1 à 5, **caractérisé en ce qu'**au moins une couche de tôle (6) orientée vers le côté intérieur de fuselage de la structure en treillis (4, 4') est formée de couches de tôle en forme de bande.

7. Panneau de fuselage (16) selon l'une quelconque des revendications 1 à 6, **caractérisé en ce que** les tôles métalliques (2, 3) ainsi que les couches de tôle (5, 6) de la structure en treillis (4, 4') présentent à chaque fois une épaisseur inférieure à 2 mm.

8. Panneau de fuselage (16) selon l'une quelconque des revendications 1 à 7, **caractérisé en ce que** les tôles métalliques (2, 3) ainsi que les couches de tôle (5, 6) de la structure en treillis (4, 4') présentent à chaque fois une épaisseur de 0,5 mm à 1,5 mm.

9. Panneau de fuselage (16) selon l'une quelconque des revendications 1 à 8, **caractérisé en ce que** le matériau des tôles métalliques (2, 3) ainsi que de la structure en treillis (4, 4') est choisi parmi un groupe de matériaux qui comprend des alliages d'aluminium, des alliages de titane, des alliages d'acier, des alliages de cuivre, des alliages de zinc et des alliages de magnésium.

10. Procédé de fabrication d'un panneau de fuselage (16) selon l'une quelconque des revendications précédentes, dans lequel l'au moins une couche de tôle (5, 6) de la structure en treillis (4, 4') est collée à au moins une tôle métallique (2, 3).

11. Procédé selon la revendication 10, **caractérisé en ce que** la structure de renforcement (18, 19) est collée au moins en partie sur la structure en treillis (4, 4').

12. Procédé selon l'une quelconque des revendications 10 et 11, **caractérisé en ce que** le collage est effectué par un processus de fabrication.
